Europäisches Patentamt

European Patent Office

Office européen des brevets

(11) Numéro de publication: **0 274 673 B1**

## (12) FASCICULE DE BREVET EUROPEEN

(19)

(45) Date de publication de fascicule du brevet:
08.05.91

(21) Numéro de dépôt: **87118252.3**

(22) Date de dépôt: **09.12.87**

(51) Int. Cl.⁵: **H01M 4/04**, B22F 3/10,
B22F 7/04, H05B 6/02

### (54) Procédé de frittage par induction.

(30) Priorité: **11.12.86 FR 8617357**

(43) Date de publication de la demande:
**20.07.88 Bulletin 88/29**

(45) Mention de la délivrance du brevet:
**08.05.91 Bulletin 91/19**

(84) Etats contractants désignés:
**AT BE CH DE FR GB IT LI LU NL SE**

(56) Documents cités:
| | |
|---|---|
| EP-A- 0 116 365 | DE-A- 3 015 981 |
| GB-A- 1 299 064 | US-A- 2 474 703 |
| US-A- 2 708 704 | US-A- 3 444 346 |

(73) Titulaire: **Société Anonyme dite SAFT**
**156, avenue de Metz**
**F-93230 Romainville(FR)**

(72) Inventeur: **Maugein, Christian**
**"Le Batan"**
**F-33750 Saint Germain du Puch(FR)**
Inventeur: **Ernst, Roland C/O CENTRE NATIO-**
**NAL**
**De La Recherche Scientifique G.I.S. Madylan**
**F-38000 Grenoble(FR)**

(74) Mandataire: **Weinmiller, Jürgen et al**
**Lennéstrasse 9 Postfach 24**
**W-8133 Feldafing(DE)**

## Description

La présente invention concerne un procédé de frittage par induction appliqué notamment à une électrode pour générateur électrochimique.

Il s'agit d'une électrode en forme de bande constituée d'un feuillard métallique sur lequel a été comprimé un mélange de poudres, poudre métallique et poudre de matière électrochimiquement active ; cette bande défile en continu dans un inducteur, comme cela est décrit dans le brevet américain n° 4 514 473. Le courant haute fréquence qui circule dans l'inducteur crée un champ électromagnétique qui génère dans la bande des courants induits ou courants de Foucault. L'échauffement qui en résulte entraîne le frittage de la poudre métallique qui emprisonne les grains de poudre de matière active.

Le problème qui se pose dans ce genre d'application est l'obtention du frittage des grains métalliques sans que les grains de matière active soient décomposés thermiquement.

Si l'on utilise des inducteurs du type de ceux qui sont décrits dans le brevet américain US-A-3 444 346, un résultat satisfaisant n'est pas obtenu car le temps nécessaire au frittage est tel que la matière active est chauffée trop longtemps et est endommagée.

Si l'on utilise un inducteur en forme d'épingle dont les branches sont situées de part et d'autre de la bande, perpendiculairement au sens de défilement, comme décrit dans la demande de brevet allemand DE 30 15 981, on constate que, si la température obtenue dans la partie centrale de la bande est satisfaisante pour réaliser le frittage dans de bonnes conditions, il existe une surchauffe excessive sur les rives de la bande, dûe à un effect de bord. Ceci présente plusieurs inconvénients. D'une part les grains de matière active situés au voisinage de ces rives sont endommagés, et le rendement des électrodes en est affecté. D'autre part certains additifs, tels que le cadmium, sont tout à fait inutilisables car ils se subliment au niveau de température atteint. Ceci entraîne en outre une pollution de l'environment.

Afin d'éviter ces inconvénients, on a proposé de refroidir les rives des bandes à l'aide d'un gaz, mais la maitrise du procédé est délicate et imprécise.

On a proposé également de mettre en oeuvre un inducteur, par exemple en forme de feuillard métallique, permettant de traiter simultanément une surface plus imporante de bande et aboutissant à une répartition plus homogène de la température. On a constaté qu'une telle solution ne convenait pas car, même si les grains de matière active recevaient globalement la même énergie totale qu'avec un inducteur en forme d'épingle, la durée plus longue de l'opération les rendaient inactifs électrochimiquement.

La présente invention a donc pur but de mettre en oeuvre un procédé permettant de maitriser la température des rives de la bande, sans modifier le profil de température obtenu par l'inducteur en forme d'épingle dans la partie centrale de celle-ci.

La présente invention a pour objet un procédé de frittage par induction d'une électrode pour générateur électrochimique, ladite électrode étant formée d'une bande métallique sur les faces de laquelle a été préalablement comprimé un mélange de poudre métallique et de poudre de matière active, procédé selon lequel ladite bande défile à l'intérieur d'un inducteur où circule un courant haute fréquence, ledit inducteur ayant la forme générale d'une épingle dont les deux branches sont situées de part et d'autre de ladite bande et perpendiculairement à son sens de défilement, caractérisé par le fait que, au droit des zones de la bande où la température de chauffage doit être abaissée, on prévoit sur chaque branche de ladite épingle des élargissements parallèles à la bande permettant une augmentation locale de la section de passage du courant inducteur.

Toute partie de l'électrode peut être traitée de cette manière, mais le traitement des rives est essentiel ; il en résulte à ce niveau d'une part une réduction du champ magnétique et du courant induits, et d'autre part des déperditions calorifiques plus importants : ce qui entraîne globalement une suppression de la surchauffe excessive observée auparavant.

L'invention a également pour objet un inducteur pour la mise en oeuvre du procédé précédent. Il est caractérisé par le fait qu'il a une forme d'épingle à deux branches, chacune des branches présentant au moins un élargissement orthogonal au plan formé par lesdites branches, au voisinage de ses extrémités.

Selon un premier mode de réalisation, lesdits élargissements sont constitués par des plaques métalliques rapportées sur lesdites branches.

Selon un second mode de réalisation, lesdites branches sont usinées de manière à présenter lesdits élargissements.

D'autres caractéristiques et avantages de la présente invention apparaîtront au cours de la description suivante de modes de réalisation donnés à titre illustratif mais nullement limitatif. Dans le dessin annexé :

- La figure 1 montre schématiquement le procédé de chauffage d'une bande par induction selon l'art antérieur.

- La figure 2 montre schématiquement un exemple d'inducteur utilisé pour la mise en oeuvre du procédé selon l'invention.

- La figure 3 indique schématiquement la répartition des courants induits dans une bande lors de son passage dans l'inducteur apparaissant dans la figure 2.

- La figure 4 montre la répartition de la température suivant la largeur L d'une bande traitée par le procédé de l'art antérieur et suivant la largeur L d'une bande traitée par le procédé selon l'invention.
- La figure 5 montre schématiquement en vue de dessus une variante de mise en oeuvre du procédé selon l'invention.
- Les figures 6, 7 et 8 sont des vues partielles très schématiques de trois variantes d'inducteur selon l'invention.

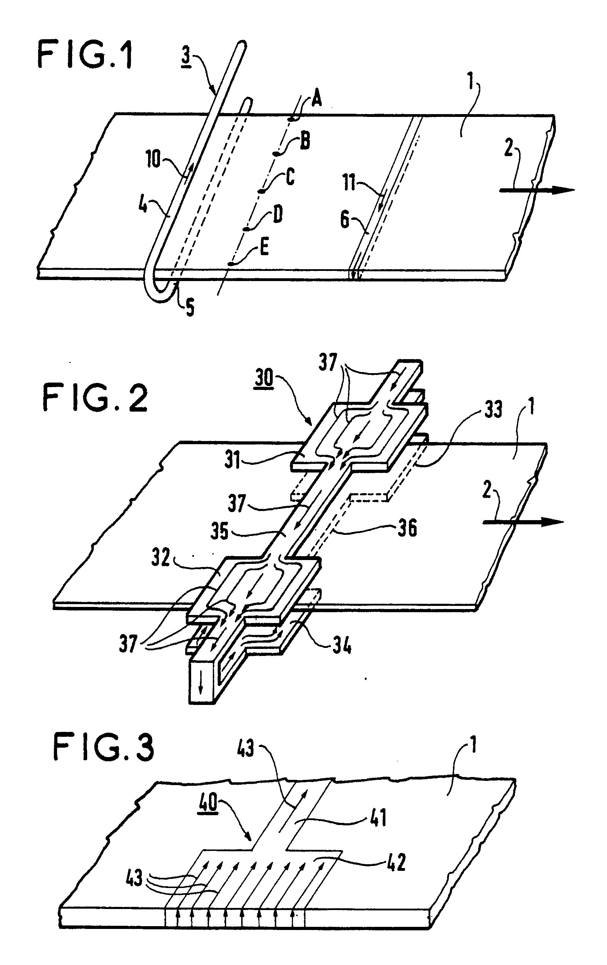

On a illustré schématiquement dans la figure 1 une électrode en forme de bande 1 qui défile dans un inducteur 3 dans le sens indiqué par la flèche 2. La bande 1 est constituée d'un feuillard d'acier perforé de largeur 35 mm, et d'épaisseur 0,1 mm recouvert d'un mélange de poudre métallique et de poudre de matière active, sauf sur ses bords latéraux suivant une largeur de l'ordre de 1 mm environ. La couche de poudre comprimée a une épaisseur de 0,6 mm environ.

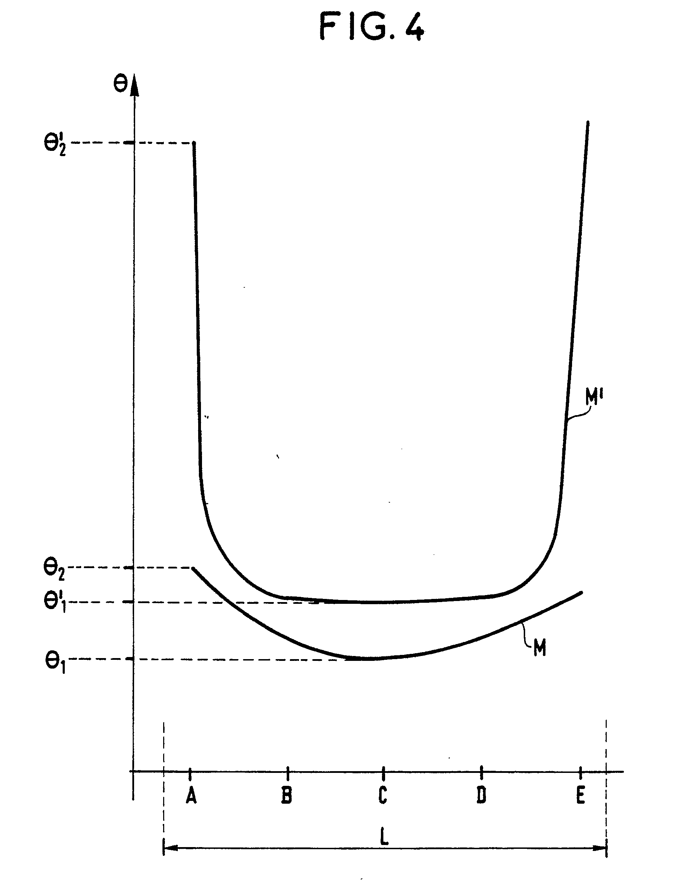

L'inducteur 3 a la forme d'une épingle à deux branches 4 et 5 situées de part et d'autre de la bande 1 ; lorsque la bande 1 passe dans l'inducteur 3, le courant inducteur 10 crée dans une zone 6 sensiblement parallélépipédique située entre les branches, un courant induit 11. Si on mesure à ce moment la température de la bande suivant sa largeur L en des points A, B, C, D, E régulièrement espacés, on observe la répartition de température $\theta$ illustrée par la courbe M' de la figure 4. (Pour des raisons de clarté, l'inducteur 3, la zone 6, et la zone des points A, B, C, D, E ont été écartés les uns des autres dans la figure 1).
A titre d'exemple $\theta'_1$ vaut 345°C, $\theta'_2$ vaut 355°C à 470°C.

Dans la figure 2, on retrouve la bande 1 qui défile dans le sens indiqué par la flèche 2 dans un inducteur 30 selon l'invention. Cet inducteur présente deux branches 35 et 36 munies à leurs extrémités d'élargissements 31, 32, 33, 34 parallèles à la bande 1. Les branches illustrées ont été usinées dans une seule pièce, mais on aurait pu obtenir une forme équivalente en rapportant des pièces métalliques sur l'inducteur 3 de la figure 1. Les flèches 37 schématisent le courant inducteur.

La vitesse de défilement de l'électrode est comprise entre 1 mètre par minute et 10 mètres par minute.
Le temps de montée en température (350°C environ) est compris entre 0,1 seconde et 1,5 seconde selon la vitesse de defilement

A titre d'exemple, pour une vitesse de défilement de 3 mètres par minute, l'élévation de température souhaitée est obtenue en un temps inférieur ou égal à 0,5 seconde ; ceci est rendu possible par la configuration de l'inducteur générant un champ étroit, de l'ordre de 25 mm au centre de l'électrode.

Dans la figure 3, on montre une zone 40 de la bande 1 au moment de son passage dans l'inducteur 30. Les flèches 43 indiquent le courant induit dans la zone 40 où l'on différencie la zone 41 de résistance R et la zone élargie 42 de résistance r. Dans la zone 41, à faible section de passage du courant, la puissance locale émise par effet Joule est très supérieure à la puissance locale émise dans la zone 42 à forte section de passage du courant 43.
D'autre part la surface d'échange thermique au niveau de la zone 42 est plus importante qu'au niveau de la zone 41 ; par conséquent les déperditions par conduction, convection et rayonnement seront également plus importantes.

On a illustré dans la figure 4 par la courbe M la distribution des températures suivant une largeur de la bande 1, aux mêmes points A, B, C, D, E. On observe que le gradient de températures qui était de 36 % (courbe M') entre le centre et le bord de la bande, est réduit à 7 % (courbe M).

L'épingle proprement dite peut êtree constituée d'un tube de cuivre présentant un diamètre de 4 mm par exemple.

L'élargissement peut présenter, à titre d'exemples, des valeurs de quelques dizaines de millimètres, par exemple 20 mm, 30 mm, 40 mm.

La largeur du bord de l'électrode traité par l'inducteur élargi peut être de l'ordre de 5 mm.

Bien entendu la forme donnée aux élargissements n'est pas limitée à celle qui a été illustrée.

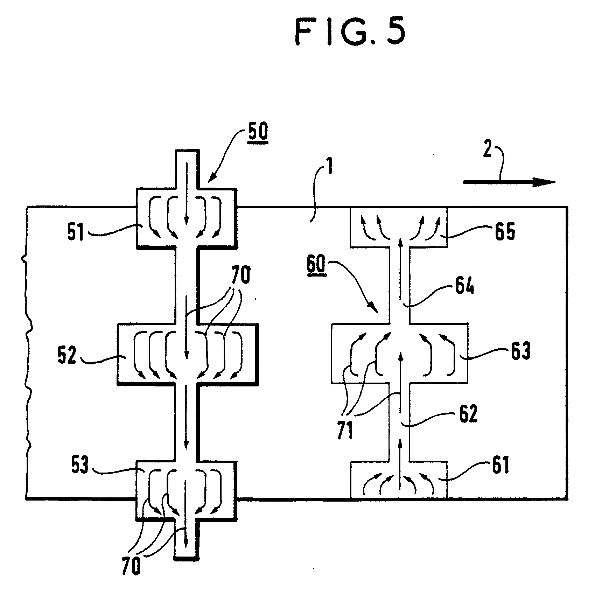

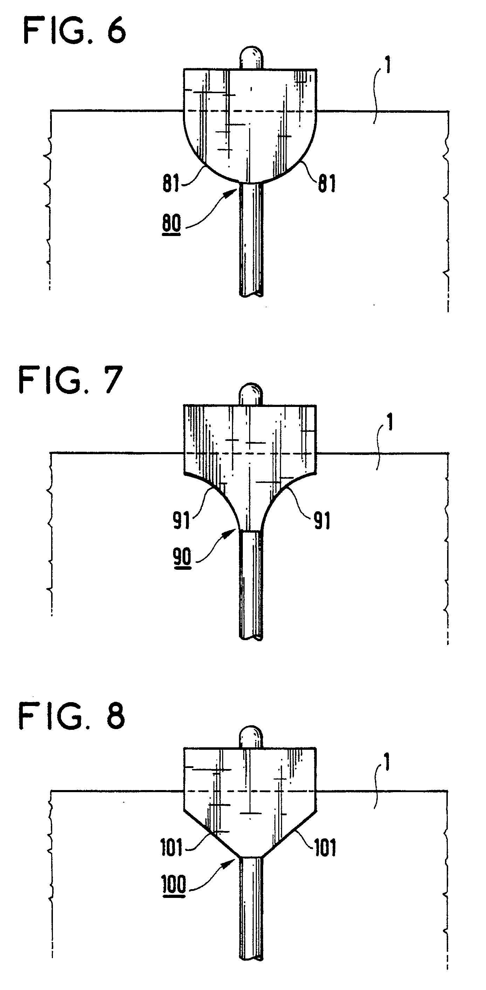

Ainsi, l'élargissement carré ou rectangulaire apparaissant dans les figures 2 et 5 peut être remplacé par un élargissement du genre de ceux qui sont schématisés dans les figures 6 à 8.

Dans la figure 6, l'épingle 80 présente un élargissement symétrique par rapport à ses branches, et en forme de portion de cercle 81.

Dans la figure 7, l'épingle 90 présente un élargissement symétrique par rapport à ses branches, et limité par des portions de courbes concaves 91.

Dans la figure 8, l'épingle 100 présente un élargissement de forme trapézoïdale limitée par deux droites 101.

Toutes ces variantes ne sont que des exemples.

Par ailleurs, il peut être envisagé de traiter également, pour certaines applications, d'autres zones de la bande 1 que ses bords. On voit dans la figure 5 un inducteur 50 du même type que celui de la figure 2 mais avec trois élargissements 51, 52, 53 de manière à créer une zone centrale à température moins élevée ; le courant inducteur est référencé 70. La zone 60 traitée par l'inducteur est illustrée dans la partie droite de la figure avec son courant induit 71 et ses zones 61 ($r_1$, $T_1$), 62 ($R_2$, $T_2$) 63 ($r_3$, $T_3$), 64 ($R_4$, $T_4$), 65 ($r_5$, $T_5$), r et R étant des résistances et T des températures. Une telle disposition s'applique lorsque la bande présente non seulement des bords latéraux sans matière active, mais ausssi une bande centrale essuyée non perforée qui peut être ultérieurement découpée de manière à réaliser simultanément deux électrodes.

Bien entendu, on pourra, sans sortir du cadre de l'invention remplacer tout moyen par un moyen équivalent.

## Revendications

1. Procédé de frittage par induction d'une électrode pour générateur électrochimique, ladite électrode étant formée d'une bande métallique sur les faces de laquelle a été préalablement comprimé un mélange de poudre métallique et de poudre de matière active, procédé selon lequel ladite bande défile à l'intérieur d'un inducteur où circule un courant haute fréquence, ledit inducteur ayant la forme générale d'une épingle dont les deux branches sont situées de part et d'autre de ladite bande et perpendiculairement à son sens de défilement, caractérisé par le fait que, au droit des zones de la bande (1) où la température de chauffage doit être abaissée, on prévoit sur chaque branche (35, 36) de ladite épingle des élargissements (31, 32, 33, 34) parallèles à la bande (1) permettant une augmentation locale de la section de passage du courant inducteur.

2. Procédé de frittage selon la revendication 1, caractérisé par le fait que ladite bande métallique (1) étant constituée d'un feuillard métallique perforé avec une zone linéaire non perforée, en position sensiblement médiane, on prévoit en outre au niveau de ladite zone linéaire des élargissements (52) sur chaque branche de ladite épingle.

3. Procédé de frittage selon l'une des revendications 1 et 2, caractérisé par le fait que la vitesse de défilement de ladite bande (1) est comprise entre 1 mètre et 10 mètres par minute, et que le temps de montée en température de la zone chauffée est ccmpris entre 0,1 seconde et 1,5 seconde.

4. Inducteur pour la mise en oeuvre du procédé selon l'une des revendications 1 à 3, caractérisé par le fait qu'il a une forme d'épingle (80, 90, 100)à deux branches, chacune des branches présentant au moins un élargissement (81, 91, 101)orthogonal au plan formé par lesdites branches, au voisinage de ses extrémités.

5. Inducteur selon la revendication 4, caractérisé par le fait que lesdits élargissements sont constitués par des plaques métalliques rapportées sur lesdites branches.

6. Inducteur selon la revendication 4, caractérisé par le fait que lesdites branches sont usinées de manière à présenter lesdits élargissements.

## Claims

1. A method of sintering an electrode for an electrochemical cell by induction, said electrode being constituted by a metal strip having a mixture of metal powder and of active material powder previously compressed onto the faces thereof, the method comprising passing said strip through an inductor having a high frequency current flowing therein, said inductor being generally in the form of a hairpin with its two branches situated on opposite sides of said strip and extending perpendicularly to its direction of displacement, characterized by the fact that, facing those zones of the strip (1) where the heating temperature is to be lowered, widened portions (31, 32, 33, 34) are provided on each branch (35, 36) of said hairpin, parallel to the strip (1) and allowing to locally increase the current cross-section through the inductor.

2. A sintering method according to claim 1, characterized by the fact that, said metal strip (1) being constituted by a perforated metal foil (1) having a linear non-perforated zone substantially in the middle thereof, widened portions (52) are additionally provided on each branch of said hairpin at the level of said linear zone.

3. A sintering method according to any one of claims 1 and 2, characterized by the fact that the displacement speed of said strip (1) lies between 1 m per minute and 10 m per minute, and that the temperature rise time in the heated zone lies between 0.1 seconds and 1.5 seconds.

4. An inductor for implementing the method accordign to any one of claims 1 to 3, characterized by the fact that it is in the form of a two-branch hairpin (80, 90, 100) with each of the branches having at least one widened portion (81, 91, 101) extending orthogonally to the plane formed by said branches, in the vicinity of the ends thereof.

5. An inductor according to claim 4, characterized by the fact that said widened portions are constituted by metal plates added to said branches.

6. An inductor according to claim 4, characterized by the fact that said branches are machined portions of the hairpin so as to constitute said widened portions.

**Ansprüche**

1. Verfahren zum Sintern einer Elektrode für einen elektrochemischen Generator durch Induktion, wobei die Elektrode durch ein Metallband gebildet ist, auf dessen Flächen zuvor eine Mischung aus Metallpulver und Aktivmaterialpulver aufgepreßt wurde, wobei das Verfahren vorsieht, daß das Band durch einen Induktor läuft, in welchem ein Hochfrequenzstrom fließt, und der Induktor die allgemeine Form einer Haarnadel aufweist, deren Schenkel zu beiden Seiten des Metallbandes und senkrecht zur Laufrichtung des Bandes verlaufen,
dadurch gekennzeichnet, daß gegenüber jenen Zonen des Bandes (1), in denen die Heiztemperatur abgesenkt sein muß, an jedem Schenkel (35, 36) der Haarnadel parallel zum Band (1) eine Verbreiterung (31, 32, 33, 34) zur örtlichen Vergrößerung des Durchschnittsquerschnitts des Induktionsstroms vorgesehen ist.

2. Sinterverfahren nach Anspruch 1, dadurch gekennzeichnet, daß für den Fall, daß das Band mit einer nicht perforierten geradlinigen Zone im im wesentlichen mittleren Berreich versehen ist, weiter im Bereich der geradlinigen Zone Verbreiterungen (52) der Nadel vorgesehen sind.

3. Sinterverfahren nach einem der Ansprüche 1 und 2, dadurch gekennzeichnet, daß die Laufgeschwindigkeit des Bandes (1) zwischen 1 und 10 m/min, und die Anstiegszeit der Temperatur in der beheizten Zone zwischen 0,1 und 1,5 Sekunden liegt.

4. Induktor zur Durchführung des Verfahrens nach einem der Ansprüche 1 bis 3, dadurch gekennzeichnet, daß er die Form einer Haarnadel (80, 90, 100) mit zwei Schenkeln besitzt, wobei jeder der Schenkel nahe an seinen Enden mindestens eine Verbreiterung (81, 91, 101) senkrecht zu der von den Schenkeln gebildeten Ebene aufweist.

5. Induktor nach Anspruch 4, dadurch gekennzeichnet, daß die Verbreiterungen aus Metallplatten bestehen, die auf den Schenkeln aufgesetzt sind.

6. Induktor nach Anspruch 4, dadurch gekennzeichnet, daß die Schenkel in der Weise bearbeitet sind, daß die Verbreiterungen entstehen.

FIG.1

FIG.2

FIG.3

# FIG. 4

# FIG. 5

FIG. 6

FIG. 7

FIG. 8